# EUROPEAN PATENT SPECIFICATION

(11) **EP 0 899 978 B1**
(45) Date of publication and mention of the grant of the patent: **05.12.2007**
(21) Application number: 98306967.5
(22) Date of filing: 28.08.1998
(51) Int. Cl.: H04Q 7/32

(54) **Short message transmission**
Kurznachrichtübertragung
Transmission de message court

(30) Priority: 28.08.1997 KR 4186797
(43) Date of publication of application: 03.03.1999
(73) Proprietor: SAMSUNG ELECTRONICS CO., LTD., Suwon-City, Kyungki-do (KR)
(72) Inventor: Lee, Hye-Young , Samsung Electronics Co, Ltd, Suwon-city, Kyungki-do (KR)
(74) Representative: Tunstall, Christopher Stephen

(56) References cited:
- EP-A- 0 751 627
- EP-A- 0 783 219

## Description

### BACKGROUND TO THE INVENTION

The present invention relates to a short message service function of a mobile communication terminal such as a CDMA (Code Division Multiple Access) or PCS (Personal Communication Services) terminal, and in particular, to a method for transmitting a short message using user predefined messages.

In a conventional digital mobile communication terminal with a short message service (SMS) function, a user of the terminal must himself input a short message every time he wished to transmit a short message. Usually, the digital mobile communication terminal does not have character keys for exclusive use of the SMS function, so the user must depress numeric keys several times to input a specific character message.

Thus, the user must manipulate the keys many times to transmit even a short message, which can be annoying and time consuming. On this account, the user may avoid using the SMS function.

EP 0 751 627 describes a communication terminal equipment and the control method thereof, which display the message information read out from information storing means on display means, and perform a desired processing with respect to the displayed message information by simple inputting. The message information stored in storing means is read out to display it on display means, and a plurality of setting items showing the corresponding processing with respect to the displayed message information are displayed on the display means. Then one of setting items is selected from a plurality of setting items by inputting means to execute the corresponding processing by control means.

EP 0 783 219 describes that in a communication device (20) comprising a message function (SMS, Short Message Service) a certain short message (7) or other reply message is sent in response to an incoming call in a situation where the user can't answer the call him/herself. The reply message can be sent immediately (9) or after a short delay (10,11), whereby during the delay, the user can choose, whether he/she answers him/herself. The calling party (5) is identified from the CLI information (Caller Line Identity), whereby the reply message can be chosen according to the calling party. Time information can be included in the reply message in order to express at which time by the clock or after a how long time the receiving party is reachable. After that time the automatic reply function based on the reply message is automatically disconnected.

### SUMMARY OF THE INVENTION

It is therefore an object of the present invention to provide an improved method of transmitting short messages.

To achieve the above object, the present invention provides a method of transmitting a short message with a digital mobile communication terminal having a user interface and a memory, the method comprising the steps of: the method comprising the steps of: displaying, on a menu of the user interface, both a first mode designated for creating and storing a predefined message and a second mode designated for transmitting a short message; selecting the first mode; receiving a first input by a user to create the predefined message; storing, before any transmission by the digital mobile communication terminal of the created, predefined message, the predefined message in the memory; after the selection of the first mode, selecting the second mode; after selection of the second mode, receiving a second input to select the predefined message for transmission; after receiving the second input, allowing the predefined message to be edited before transmission; and after allowing the predefined message to be edited,, transmitting the predefined message.

Preferably, embodiments provide a method further comprising the step of storing a plurality of predefined messages in a memory (step 27) by: detecting the selection of the user predefined message storing mode by the user and displaying display data notifying the user to input a user predefined message to be stored steps 22 & 23); and if the selected user predefined message and a storage address are input in accordance with display data, storing the user predefined message in the storage addresses.

Embodiments provide a method wherein the editing step (step 36) comprises the steps of: upon detecting the selection of the user predefined message, displaying the selected user predefined message on a display (step 35); and editing the displayed user predefined message by the user and displaying the edited user message.

Embodiments provide a method in which the step of transmitting comprises the steps of selecting a CPT or CMT of SMS transmission modes; and transmitting the short message according to the selected SMS transmission mode.

Embodiments provide an apparatus comprising means to implement a method as claimed herein.

The selection of one of the predefined messages may be detected by reading in sequence from the memory, and displaying, the predefined messages and detecting the selection of one of the displayed messages through the user interface.

The method may comprise displaying the selected predefined message and modifying it in accordance with edit data or input data received through the user interface prior to notifying the user to input a user predefined message to be stored (steps 22 & 23); and if the selected user predefined message and a storage address are input in accordance with the display data, storing the user predefined message in the storage addressees.

Embodiments provide a method wherein the editing step (step 36) comprises the steps of: upon detecting the selection of the user predefined message, displaying the selected user predefined message on a display (step 35); and editing the displayed user predefined message by the user and displaying the edited user predefined message.

Embodiments provide an apparatus comprising means to implement a method as claimed herein.

The selection of one of the predefined messages may be detected by reading in sequence from the memory, and displaying, the predefined messages and detecting the selection of one of the displayed messages through the user interface.

The method may comprise displaying the selected predefined message and modifying it in accordance with edit data or input data received through the user interface prier to transmission.

Preferably, the selected message is transmitted by determining whether a telephone number for a called party in input through the user interface means, determining whether a telephone number for a calling party is input through the user interface means, when the telephone number for the called party is input, determining whether a message transmission command is input through the user interface means and upon receipt of the message transmission command, transmitting the edited message to the telephone number for the called party.

The predefined messages may be stored in the memory by receiving a message storing command through the user interface, displaying first display data requesting a user to input a predefined message, receiving a message through the user interface and storing the message received in the memory as a predefined message.

The present invention also extends to a digital mobile communication terminal having a user interface, a memory containing a plurality of predefined messages and control means adapted to detect the selection of one of the stored predefined messages through the user interface and to transmit the selected message as a short message.

### BRIEF DESCRIPTION OF THE DRAWINGS

The present invention will now be described by way of example with reference to the accompanying drawings in which:
FIG. 1 is a block diagram of a digital mobile communication terminal; and
FIGs. 2A and 2B are flow charts illustrating the procedure for transmitting a short message.

### DETAILED DESCRIPTION OF THE INVENTION

It is to be noted that the present invention is applicable to a digital mobile communication terminal with the SMS function. The CPT (cellular Paging Teleservice) function mentioned below, corresponding to the PPT (PCS Paging Teleservice) function of the PCS terminal, is the SMS function of the CDMA terminal for transmitting only the telephone numbers of the called party and the calling party. The CMT (Cellular Message Teleservice) function corresponding to the PMT (PCS message Teleservice) function of the PCS terminal is the SMS function of the CDMA terminal for transmitting short user messages. The SMS function is specified in detail in the IS-637 and IS-95A Standards.

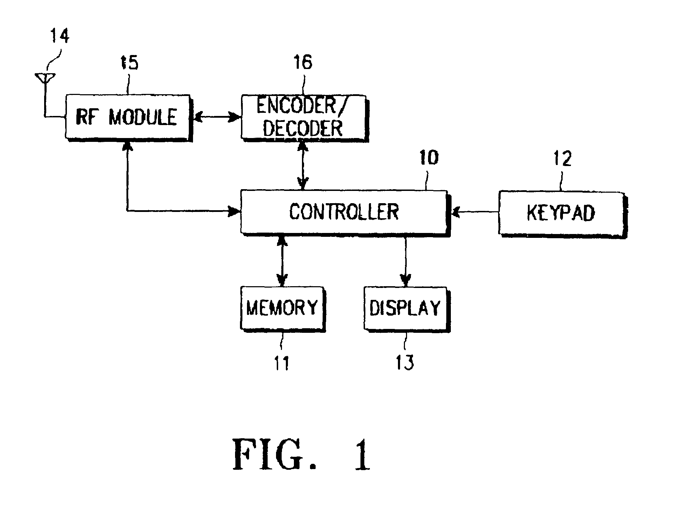

FIG. 1 shows a block diagram of a digital mobile communication terminal to which the present invention may be applied. As shown in this figure, a controller 10 controls the overall operations of the communication terminal. A memory 11 consists of a ROM (Read Only Memory) for storing a program of operation of the present invention, a RAM (Random Access Memory) for temporarily storing data generated during execution of the program and an EEPROM (Electrically Erasable and Programmable ROM) for storing user predefined messages.

An RF (Radio Frequency) module 15 demodulates RF signals received from an antenna 14 and outputs the modulated RF signal to an encoder/decoder 16. Further, the RF module 15 modulates signals input from the encoder/decoder 16, converts the modulated signals to RF signals and radiates the RF signals through the antenna 14. The encoder/decoder 16, being an exclusive chip for the CDMA or PCS terminal, encodes the generated signal using CDMA or PCS technology under the control of the controller 10 and outputs the encoded signal to the RF module 15. Also, the encoder/decoder 16 decodes the signal input from the RF module 15 using CDMA or PCS technology and outputs the decoded signal to the controller 10. A keypad 12, being a user interface, includes a number of numeric keys for dialling and function keys for performing various functions, and generates key data to the controller 10 by the key manipulation of the user. A display 13, being an LCD (Liquid Crystal Display), displays display data under the control of the controller 10.

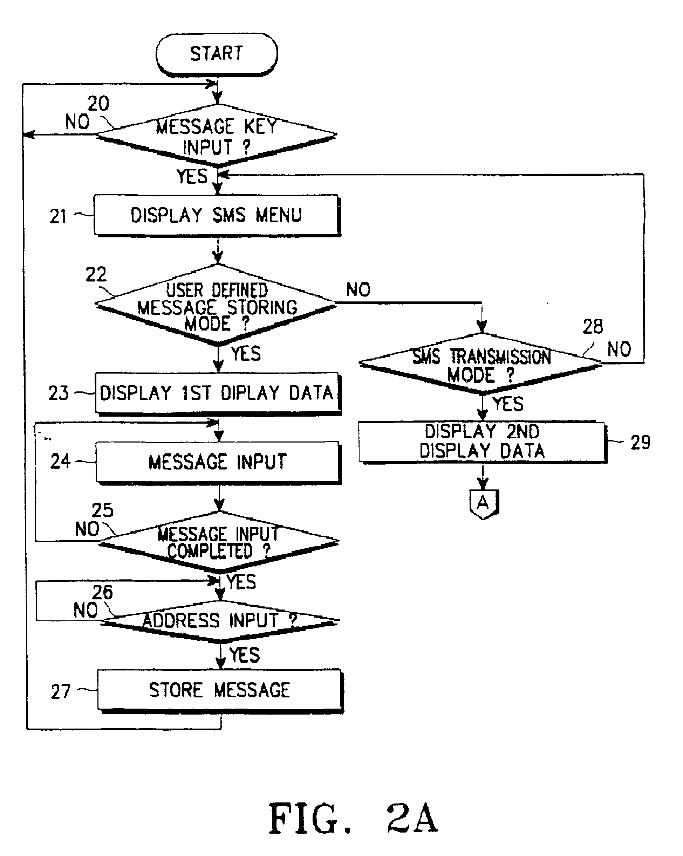

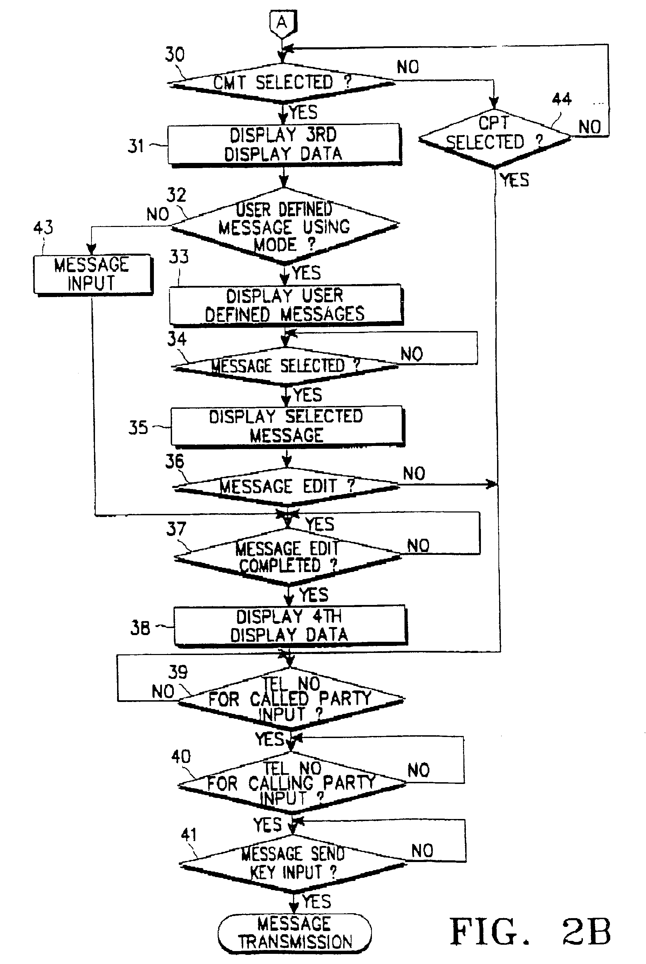

FIGs. 2A and 2B are flow charts illustrating the procedure of transmitting a short message in a digital mobile communication terminal according to the present invention. As illustrated, the procedure includes the steps of storing user predefined messages, reading and editing the stored user predefined messages and transmitting the edited messages.

Firstly, to store the user predefined messages, the user manipulates a message key to enter the SMS mode. The controller 10 then detects the message key input in step 20, and displays an SMS menu on the display 13 in step 21. Here, the SMS menu may include a mode for storing the user predefined messages and a mode for transmitting the short message (SMS mode), and assists the user in choosing between modes. By the help of the SMS menu, the user manipulates a mode select key to select the mode for storing the user predefined message.

If the user predefined message storing mode is selected in step 22, the controller 10 displays first display data on the display 13 in step 23. Here, the first display data may be data notifying the user to input the user predefined message that he desires to store. At the sight of the first display data, the user will input the user predefined message by manipulating the character keys. The controller 10 then receives in step 24 the user predefined message until a signal representing completion of the message input is input by the user in step 25. Here, the signal representing the completion of the message input may be generated by depression of a specific key. Thereafter, if a storage address is input in step 26, the controller 10 stores the user predefined message in the storage address in step 27.

However, if the user does not choose the message storage mode but chooses the SMS mode in the step 22, the controller 10 senses in step 28 that the SMS mode is selected and displays second display data on the display 13 in step 29. Here, the second display data may be data notifying the user to choose between the CMT function and the CPT function. Then, the user chooses one of the CMT and CPT functions by manipulating the keys in answer to the second display data.

If the user chooses the CMT function in step 30, the controller 10 displays third display data on the display 13 in step 31. Here, the third display data may be data notifying the user to decide whether to use the predefined message in inputting the short message to be transmitted. If the user decides to use the user predefined message in step 32, the controller 10 displays a menu consisting of the user predefined messages on the display 13 in step 33. Then, the user will manipulate a select key to choose that one of the user predefined messages that is the most similar to the short message that he desires to transmit.

Upon sensing the selection of the user predefined message in step 34, the controller 10 displays the selected user predefined message on the display 13 in step 35. At the sight of the displayed user predefined message, the user edits, if necessary, the user predefined message through key manipulation in step 36.

However, if the user decides in the step 32 not to use the user predefined message but to input the message himself, the controller 10 receives the message that the user inputs by manipulating the keys and displays the input message on the display 13 in step 43. On receiving a signal representing completion of the message edit or the message input in step 37, the controller 10 displays fourth display data on the display 13 in step 38. Here, the fourth display data may be the message edited or input and data notifying the user to input the telephone numbers for the called party and the calling party. In compliance with the fourth display data, the user will input the telephone numbers for the called party and the calling party and input a send key for transmitting the short message.

The controller 10 then receives the telephone number for the called party to which the short message is to be transmitted in step 39 and the telephone number for the calling party in step 40, and transmits the short message to the called party upon receipt of the send key input in step 41.

However, if the user inputs the telephone numbers without editing the message in the step 36, the controller 10 jumps to the step 39. Similarly, if the user does not choose the CMT function in the step 30 and instead chooses the CPT function in step 44, the controller 10 also jumps to the step 39.

The message input in the step 43 may be stored as a user predefined message if desired.

As described above, the digital mobile communication terminal of the invention stores the user predefined messages that the user frequently uses and transmits a short message by allowing the selection and editing of that one of the stored user predefined messages which is closest to the message to be transmitted. Accordingly, the user can input the short message easily and comparatively quickly.

## Claims

1. A method of transmitting a short message with a digital mobile communication terminal having a user interface (12) and a memory (11), the method comprising the steps of:
displaying (21), on a menu of the user interface, both a first mode designated for creating and storing a predefined message and a second mode designated for transmitting a short message;
selecting the first mode;
receiving (24) a first input by a user to create the predefined message;
storing (27), before any transmission by the digital mobile communication terminal of the created, predefined message, the predefined message in the memory;
after the selection of the first mode, selecting the second mode;
after the selection of the second mode, receiving a second input to select the predefined message for transmission;
after receiving the second input, allowing the predefined message to be edited before transmission; and
after allowing the predefined message to be edited, transmitting said message.

2. The method of claim 1, further comprising the steps of:
receiving (24) input by the user to create additional predefined messages;
selecting the first predefined message from among the first predefined message and the additional predefined messages, wherein the transmitting step transmits the first predefined message.

3. The method of claim 1, wherein the user input receiving steps receive the input from a keypad.

4. The method of claim 1, further comprising the steps of:
selecting one of a Cellular Message Teleservice CMT mode and a Cellular Paging Teleservice CPT mode, wherein if the CMT mode is selected, the transmitting step transmits a text message and if the CPT mode is selected, the transmitting step transmits only a telephone number.

5. A mobile communication terminal comprising means for implementing the method as claimed in any of the preceding claims.

6. A computer program comprising computer readable instructions for implementing a method as claimed in any of claims 1 to 4.

7. A computer readable storage storing a computer program as claimed in claim 6.

## Patentansprüche

1. Verfahren für das Übertragen einer Kurznachricht mit einem digitalen Mobilkommunikationsendgerät, das eine Anwenderschnittstelle (12) und einen Speicher (11) aufweist, wobei das Verfahren die folgenden Schritte umfasst:
Anzeigen (21) in einem Menü der Anwenderschnittstelle sowohl eines ersten Modus, der für das Erzeugen und Speichern einer vordefinierten Nachricht bestimmt ist, als auch eines zweiten Modus, der für das Übertragen einer Kurznachricht bestimmt ist;
Auswählen des ersten Modus;
Empfangen (24) einer ersten Eingabe durch einen Anwender, um die vordefinierte Nachricht zu erzeugen;
Speichern (27) der vordefinierten Nachricht in dem Speicher, vor einer Übertragung der erzeugten, vordefinierten Nachricht durch das digitale Mobilkommunikationsendgerät;
Auswählen des zweiten Modus nach dem Auswählen des ersten Modus; Empfangen einer zweiten Eingabe nach dem Auswählen des zweiten Modus, um die vordefinierte Nachricht für die Übertragung auszuwählen;
Nach Empfangen der zweiten Eingabe, Ermöglichen, dass die vordefinierte Nachricht vor der Übertragung editiert werden kann; und
Nach dem Ermöglichen, dass die vordefinierte Nachricht vor der Übertragung editiert werden kann, Übertragen der Nachricht.

2. Verfahren von Anspruch 1, das ferner die folgenden Schritte umfasst:
Empfangen (24) einer Eingabe durch den Anwender, um zusätzliche vordefinierte Nachrichten zu erzeugen;
Auswählen der ersten vordefinierten Nachricht aus der ersten vordefinierten Nachricht und der zusätzlichen vordefinierten Nachricht, wobei der Übertragungsschritt die erste vordefinierte Nachricht überträgt.

3. Verfahren von Anspruch 1, wobei die Anwendereingabe-Empfangsschritte die Eingabe von einer Tastatur empfangen.

4. Verfahren von Anspruch 1, das ferner die folgenden Schritte umfasst:
Auswahlen eines zellularen Nachrichten-Teledienstes CMT- oder eines zellularen
Funkruf-Teledienstes CPT-Modus, wobei, wenn der CMT-Modus ausgewählt wird, der Übertragungsschritt eine Textnachricht überträgt, und wenn der CPT-Modus ausgewählt wird, der Übertragungsschritt lediglich eine Telefonnummer überträgt.

5. Mobilkommunikationsendgerät, das eine Einrichtung für das Implementieren des Verfahrens umfasst, wie es in einem der vorstehenden Ansprüche geltend gemacht wird.

6. Computerprogramm, das computerlesbare Befehle für das Implementieren eines Verfahrens umfasst, wie es in einem der Ansprüche von 1 bis 4 geltend gemacht wird.

7. Computerlesbarer Speicher, der ein Computerprogramm speichert, wie es in Anspruch 6 geltend gemacht wird.

## Revendications

1. Procédé d'émission d'un message court avec un terminal de communication mobile numérique ayant une interface utilisateur (12) et une mémoire (11), le procédé comprenant les étapes consistant à :
afficher (21), sur un menu de l'interface utilisateur, à la fois un premier mode conçu pour créer et stocker un message prédéfini et un second mode conçu pour émettre un message court ;
sélectionner le premier mode ;
recevoir (24) une première entrée d'un utilisateur, pour créer le message prédéfini ;
stocker (27) le message prédéfini en mémoire, avant toute émission par le terminal de communication mobile numérique du message prédéfini créé ;
après la sélection du premier mode, sélectionner le second mode ;
après la sélection du second mode, recevoir une seconde entrée afin de sélectionner le message prédéfini pour l'émettre ;
après la réception de la seconde entrée, autoriser l'édition du message prédéfini avant de l'émettre ;
après avoir autorisé l'édition du message prédéfini, émettre ledit message,

2. Procédé selon la revendication 1, comprenant en outre les étapes consistant à :
recevoir (24) une entrée de l'utilisateur pour créer des messages prédéfinis supplémentaires ;
choisir le premier message prédéfini, parmi le premier message prédéfini et les messages prédéfinis supplémentaires, l'étape d'émission consistant à émettre le premier message prédéfini.

3. Procédé selon la revendication 1, dans lequel les étapes de réception d'une entrée de l'utilisateur consistent à recevoir l'entrée à partir d'un clavier.

4. Procédé selon la revendication 1, comprenant en outre les étapes consistant à :
sélectionner un mode, entre le mode de Téléservice Cellulaire de Messages, CMT, pour « Cellular Message *Teleservice* », et le mode de Téléservice Cellulaire de Recherche de Personnes, CPT, pour *« Cellular Paging Teleservice* », l'étape d'émission émettant un message de texte si le mode CMT est sélectionné et l'étape d'émission émettant seulement un numéro de téléphone si le mode CPT est sélectionné.

5. Terminal de communication mobile numérique comprenant un moyen destiné à mettre en oeuvre le procédé selon l'une quelconque des revendications précédentes.

6. programme d'ordinateur comprenant des instructions lisibles par ordinateur et destiné à mettre en oeuvre un procédé selon l'une quelconque des revendication 1 à 4.

7. Moyen de stockage lisible par ordinateur, stockant un programme d'ordinateur selon la revendication 6.
